# EUROPEAN PATENT APPLICATION

(11) **EP 4 776 113 A1**
(43) Date of publication of application: **15.07.2026**
(21) Application number: 25224503.0
(22) Date of filing: 17.12.2025
(51) Int. Cl.: G06F 3/12, G06F 3/04847

(54) **PRINT SETTING DEVICE AND NON-TRANSITORY COMPUTER READABLE STORAGE MEDIUM STORING PRINT SETTING PROGRAM**

(30) Priority: 19.12.2024 JP 2024224041
(71) Applicant: Seiko Epson Corporation, Tokyo 160-8801 (JP)
(72) Inventor: ITO, Ryo, Suwa-shi, 392-8502 (JP); SUGIYAMA, Yuichi, Suwa-shi, 392-8502 (JP); YAMASHITA, Takuya, Suwa-shi, 392-8502 (JP)
(74) Representative: Lewis Silkin LLP

(57) **Abstract**

A print setting device includes: a reception unit that receives print jobs for printing a print region, and a front region and a rear region adjacent to the print region on a front side and a rear side in a conveyance direction of a print medium; and a display unit that displays a collective setting unit for collectively performing settings related to both a process of changing a length of a first rear region, which is a rear region of a first print job, and a process of changing a length of a second front region, which is a front region of a second print job, with respect to the first print job and the second print job which are the print jobs continuously printed on the print medium.

## Description

The present application is based on, and claims priority from JP Application Serial Number 2024-224041, filed December 19, 2024, the disclosure of which is hereby incorporated by reference herein in its entirety.

### BACKGROUND

### 1. Technical Field

The present disclosure relates to a print setting device and a non-transitory computer-readable storage medium storing a print setting program.

### 2. Related Art

In the related art, a technique of printing information on post-processing in a region adjacent to a print region is known. For example, JP-A-2024-63928 discloses a configuration in which post-processing information indicating a setting of post-processing is printed at a position between an n-th image that is an n-th print target and an (n + 1) th image that is an (n + 1) -th print target, and when it is not necessary to change the setting of post-processing, a print setting is changed so as not to print the post-processing information.

JP-A-2024-63928 is an example of the related art.

In the related art, it is automatically determined that it is not necessary to change the setting of the post-processing in images to be continuously printed, and the post-processing information is automatically set not to be printed. However, even when the setting of the post-processing is the same between the images to be continuously printed, it may be better not to omit the printing of the post-processing information. For example, when delivery destinations of printed matters that are continuously printed are different, when the printed matters that are continuously printed are post-processed by different post-processing devices, or when post-processing is performed at different timings, if printing of post-processing information is omitted, the content of post-processing becomes unclear.

As described above, in order to prevent the omission of the necessary post-processing information, it is conceivable to allow a user to set the necessity of the omission of the post-processing information. However, when a setting by the user is enabled, an inappropriate setting may be performed due to a setting error.

### SUMMARY

A print setting device according to an embodiment includes: a reception unit that receives print jobs for printing a print region, and a front region and a rear region adjacent to the print region on a front side and a rear side in a conveyance direction of a print medium; and a display unit that displays a collective setting unit for collectively performing settings related to both a process of changing a length of a first rear region, which is a rear region of a first print job, and a process of changing a length of a second front region, which is a front region of a second print job, with respect to the first print job and the second print job which are the print jobs continuously printed on the print medium.

A print setting program according to an embodiment causes a computer to function as: a reception unit that receives print jobs for printing a print region, and a front region and a rear region adjacent to the print region on a front side and a rear side in a conveyance direction of a print medium; and a display unit that displays, on the display unit, a collective setting unit for collectively performing settings related to both a process of changing a length of a first rear region, which is a rear region of a first print job, and a process of changing a length of a second front region, which is a front region of a second print job, with respect to the first print job and the second print job which are the print jobs continuously printed on the print medium.

### BRIEF DESCRIPTION OF THE DRAWINGS

FIG. 1 is a diagram schematically showing an example of a system including a print setting device.
FIG. 2 is a diagram showing an example of a print medium.
FIG. 3 is a block diagram showing a configuration of the print setting device.
FIG. 4 is a block diagram showing a configuration of a server.
FIG. 5 is a diagram showing an example of post-processing type information.
FIG. 6 is a diagram showing an example of print job data.
FIG. 7 is a block diagram showing a configuration of a control terminal.
FIG. 8 is a block diagram showing a configuration of a printing device.
FIG. 9 is a flowchart of a printing process.
FIG. 10 is a diagram showing an example of a screen for inputting a post-processing type.
FIG. 11 is a diagram showing an example of a screen for registering a print job.
FIG. 12 is a diagram showing an example of a list display of print jobs.
FIG. 13 is a diagram showing an example of a screen on which designated print jobs are displayed.
FIG. 14 is a diagram showing a print example on the print medium.
FIG. 15 is a diagram showing an example of a screen on which designated print jobs are displayed.

### DESCRIPTION OF EMBODIMENTS

An embodiment of the present disclosure will now be described in the following order.
(1) System Configuration:
   (1-1) Configuration of Print Setting Device:
   (1-2) Configuration of Server:
   (1-3) Configuration of Control Terminal:
   (1-4) Configuration of Printing Device:
(2) Printing Process:
(3) Other Embodiments:

### (1) System Configuration:

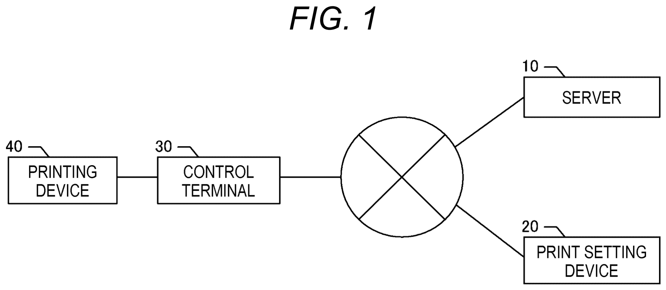

FIG. 1 is a diagram schematically showing a configuration example of a system including a print setting device according to an embodiment of the present disclosure. The system includes a server 10, a print setting device 20, a control terminal 30, and a printing device 40. In the present embodiment, the printing device 40 is coupled to the control terminal 30. Further, a user can register a print job in a storage medium included in the server 10 using the print setting device 20 and cause the printing device 40 to print the print job. In the present embodiment, the number of shown devices is an example, and the number is not limited. For example, a plurality of print setting devices 20, control terminals 30, and printing devices 40 may be provided.

In the present embodiment, the server 10, the print setting device 20, and the control terminal 30 can communicate with each other via a network. The network may have any of various aspects, and may be a local network, or apparatuses present in physically separate places may communicate with each other via the Internet or the like. The printing device 40 may be capable of communicating with the server 10 and the print setting device 20. In the present embodiment, the system including the server 10 is a system that prints a printed matter. A post-processing device that executes another process, for example, surface processing, on the printed matter after printing may be managed by the server 10.

In the present embodiment, a user who receives a request for production of a printed matter from a requester prints printed matters related to a plurality of requests using the printing device 40. The printed matter is post-processed by the post-processing device. When printing the printed matter, the user prepares a print file indicating an image as a print target, inputs a print condition, and generates a print job. In the present embodiment, the print job includes a job for printing information on post-processing. Therefore, in the present embodiment, information on post-processing is printed on the print medium together with a print image.

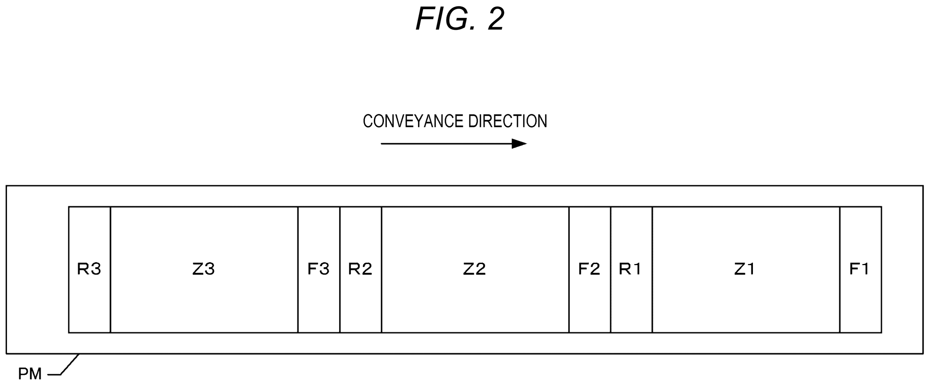

FIG. 2 is a diagram showing an example of a print medium PM. In the present embodiment, the printing device 40 is a device that conveys the print medium PM accumulated in a roll in a conveyance direction while drawing out the print medium PM and executes printing. In the printing device 40, printing according to a plurality of print jobs can be continuously executed. FIG. 2 shows an example in which print jobs 1, 2, 3 are continuously printed. Images as a print target in the print jobs 1, 2, 3 are printed in print regions Z1, Z2, and Z3, respectively.

Further, in the present embodiment, the information on post-processing is printed in a front region and a rear region adjacent to a print region on a front side and a rear side in a conveyance direction of a print medium. In FIG. 2, the front region is indicated by a front region F and a rear region R, and the numbers of the jobs are associated with the respective codes when the regions of the print jobs are distinguished. For example, a front region F1 and a rear region R1 are a front region and a rear region of the print job 1. Similarly, when a print region is indicated without distinguishing print jobs, the print region is expressed as a print region Z, and when a print region for each print job is indicated, the print region is expressed as, for example, the print region Z1 in association with a job number.

The information on the post-processing is information referred to by the post-processing device or a user who performs the post-processing. For example, when a print medium after printing is conveyed to the post-processing device and is post-processed, the post-processing device reads information on the post-processing and determines an operation of the post-processing device. Further, the user operates the post-processing device in accordance with an instruction indicated by the information on the post-processing. The front region and the rear region may be used not only for transmitting information but also for position adjustment of the print medium in the post-processing device. For example, as will be described later, when the post-processing device is a cutting device that cuts the medium into a predetermined shape, there is a case where a position of a blade die set in a cutting device and a position of an image on a print medium after printing are adjusted while actually cutting the front region F or the rear region R and registering the positions, and then the print region Z is cut. That is, the front region and the rear region may be used as regions for position adjustment during cutting.

The front region F includes information on post-processing when the print medium PM is set in the post-processing device, conveyed in a conveyance direction, and post-processed. On the other hand, the rear region R includes information on post-processing when the print medium PM is set in the post-processing device, conveyed in a direction opposite to the conveyance direction at the time of printing, and post-processed. For example, front regions F1, F2, and F3 include information on post-processing when the print medium PM is conveyed in the conveyance direction and post-processed in each of the print regions Z1, Z2, and Z3. Rear regions R3, R2, and R1 include information on post-processing when the print medium PM is conveyed in a direction opposite to the conveyance direction and post-processed in each of the print regions Z3, Z2, and Z1. According to the above configuration, even when the print medium PM is conveyed in any direction, post-processing can be performed, and the efficiency of post-processing can be improved.

In the above configuration, when information on post-processing corresponding to continuous print jobs is the same, printing of the information on post-processing, that is, printing of the front region and the rear region can be omitted. For example, in the example shown in FIG. 2, when the post-processing of the print jobs 1, 2 is the same, the information printed in the front regions F1 and F2 is the same, and the information printed in the rear regions R1 and R2 is the same. When the post-processing including the cutting is the same, it is not necessary to replace a blade die set in the cutting device between the print regions Z of the print jobs 1, 2.

Therefore, when the post-processing of the print jobs 1, 2 is continuously executed by the same post-processing device, the rear region R1 and the front region F2 may be omitted. That is, when the post-processing is executed while the print medium PM is conveyed in the conveyance direction, the post-processing can be performed on both of the print jobs 1, 2 based on information on the front region F1, and the front region F2 can be omitted. When post-processing is executed while the print medium PM is conveyed in a direction opposite to the conveyance direction, the post-processing can be performed on both of the print jobs 2, 1 based on information on the rear region R2, and the rear region R1 can be omitted. When such an omission is performed, the time required for printing can be shortened, and an amount of use of the print media and an amount of use of colorants can be reduced.

However, when the post-processing of the print jobs 1, 2 is not continuously executed by the same post-processing device, the rear region R1 and the front region F2 may not be omitted. For example, when delivery destinations of the print jobs 1, 2 are different, the print medium PM including the print jobs 1, 2 may not be continuously post-processed by the post-processing device. In this case, since the print job 1 is post-processed first and the print job 2 is post-processed later, when the rear region R1 and the front region F2 are omitted, the content of the post-processing becomes unknown. Further, when the print jobs 1, 2 are post-processed by different post-processing devices, if the rear region R1 and the front region F2 are omitted, the content of the post-processing becomes unknown.

Therefore, when the post-processing of the continuous print jobs is the same, if the printing of the front region and the rear region between print regions uniformly adjacent to each other is omitted automatically, a situation may occur in which the information on the post-processing is omitted although the information on the post-processing is necessary. On the other hand, when the user can select whether to omit each of the front region and the rear region, there is a possibility that meaningless selection, such as omitting only one of the front region and the rear region, is performed.

Therefore, in the present embodiment, when the print job is set, the possibility that an inappropriate setting is performed due to a setting error is reduced. Hereinafter, a configuration of each device of a system that realizes such notification will be described.

### (1-1) Configuration of Print Setting Device:

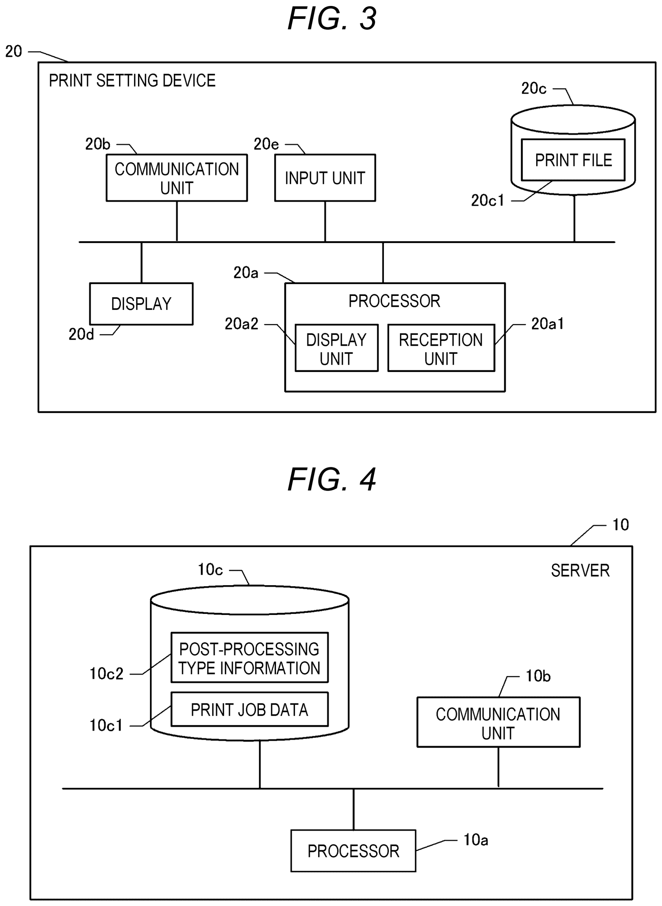

FIG. 3 is a block diagram showing a configuration of the print setting device 20. The print setting device 20 includes a processor 20a, a communication unit 20b, a storage medium 20c, a display 20d, and an input unit 20e. The processor 20a includes a CPU, a ROM, a RAM, and the like (not shown), and can execute various programs recorded in the storage medium 20c and control each unit of the print setting device 20.

The processor 20a may be implemented by a single chip, may be implemented by a plurality of chips, or may be implemented as an SoC with various function blocks that operate units. For example, an ASIC may be adopted instead of the CPU, or the CPU and the ASIC may cooperate with each other. When the devices in the embodiment each include a processor, the processor can be implemented in various forms, as the processor 20a.

The communication unit 20b includes a communication interface via which the communication unit 20b communicates with an external device in accordance with various wired or wireless communication protocols. The print setting device 20 can communicate with other devices via the communication unit 20b. The communication unit 20b includes an interface via which the communication unit 20b communicates with various removable memories attached to the print setting device 20.

In the storage medium 20c of the print setting device 20, a print file 20c1 indicating a print image requested to be printed by a requester is recorded. The print file 20c1 may be recorded in the storage medium 20c in any form. For example, the print file 20c1 prepared by the requester who has requested printing may be recorded in a removable memory and transferred from the removable memory to the storage medium 20c via the communication unit 20b. Alternatively, the print file 20c1 may be acquired from an external device via a network. Further, the user or the like may use the print setting device 20 to create the print file 20c1 by an application program or the like and record the print file 20c1 in the storage medium 20c. Of course, the user or the like may edit the document created by the requester to generate the print file 20c1 and record the print file 20c1 in the storage medium 20c.

The display 20d is a display device that displays any image. The input unit 20e is a device through which the user performs an input operation, and includes, for example, a keyboard, a mouse, and a touch panel. In any case, the user can input an intention of the user by operating the input unit 20e while visually recognizing an image or a character displayed on the display 20d.

The user can access the server 10 using the display 20d and the input unit 20e of the print setting device 20 as a user interface, and can perform various inputs. The input includes an input for registering a post-processing type and generating a print job. The input for generating a print job includes an input for transmitting the print file 20c1 to the server 10 and specifying a print condition for printing an image based on the print file 20c1.

The processor 20a executes a predetermined program (not shown) to perform settings related to the print job, and functions as a reception unit 20a1 and a display unit 20a2. The reception unit 20a1 has a function of receiving a print job for printing each of the print region Z and the front region F and the rear region R adjacent to the print region Z on a front side and a rear side in the conveyance direction of the print medium PM. The display unit 20a2 has a function of displaying, on the display unit, a collective setting unit for collectively performing settings related to both a process of changing a length of a first rear region, which is a rear region of a first print job, and a process of changing a length of a second front region, which is a front region of a second print job, with respect to the first print job and the second print job which are the print jobs continuously printed on the print medium PM.

Specifically, the processor 20a controls the display 20d by the function of the display unit 20a2, and displays a user interface for performing input related to the print job. The user operates the input unit 20e while visually recognizing the user interface, and performs various inputs. When various inputs are performed, the processor 20a receives the input content by the function of the reception unit 20a1.

The user can perform an input for generating a print job as one of the inputs. That is, the user operates the input unit 20e to designate a desired print file indicating the content to be printed in the print region Z. The processor 20a receives the designation of the print file 20c1 indicating the content to be printed in the print region Z by the function of the reception unit 20a1. In addition, the user operates the input unit 20e to designate a print condition for printing in the print region Z. The processor 20a receives the print condition for the printing in the print region Z by the function of the reception unit 20a1.

Further, the user operates the input unit 20e to designate the post-processing type. The post-processing type is defined by the user in advance, and is information indicating the type of post-processing to be executed after printing on the print medium PM. Details of the post-processing type will be described later. When the type of post-processing is specified, the processor 20a generates a print file for post-processing for printing information indicating the content of the type of post-processing in the front region F and the rear region R.

The processor 20a transmits, to the server 10 via the communication unit 20b, the print file 20c1, the print condition for printing using the print file 20c1, and the print file for post-processing. A processor 10a of the server 10 receives these pieces of information and generates print job data 10c1 for performing printing (details will be described later).

In the present embodiment, the user can also generate a print job for continuously printing a plurality of print jobs. When the user starts a setting for continuously printing a plurality of print jobs via the input unit 20e, the processor 20a requests the server 10 for a list of print jobs via the communication unit 20b. When the list of print jobs transmitted from the server 10 is transmitted, the processor 20a displays the list of print jobs on the display 20d by the function of the display unit 20a2.

When the user selects print jobs of a print target and the print order, the processor 20a causes the display 20d to display a collective setting unit for setting whether the front region F and the rear region R between the two print jobs are omitted (the length is set to 0) when the post-processing type of the print jobs continuously printed on the print medium PM is the same by the function of the display unit 20a2. For example, in the example shown in FIG. 2, when the post-processing types of the print job 1 and the print job 2 are the same, the processor 20a displays, on the display 20d, a collective setting unit for setting whether to omit the front region F2 and the rear region R1.

Therefore, when the print job 1 is regarded as a first print job, the print job 2 is regarded as a second print job, the rear region R1 of the print job 1, which is the first print job, is regarded as the first rear region, and the front region F2 of the print job 2, which is the second print job, is regarded as the second front region, a collective setting unit for collectively performing settings related to both a process of changing a length of the first rear region and a process of changing a length of the second front region is displayed. A display example of the collective setting unit will be described in detail later.

When the user performs an input by the collective setting unit, the processor 20a transmits, to the server 10 via the communication unit 20b, information related to print jobs to be continuously printed. Specifically, the processor 20a transmits identification information of print jobs and information indicating a print order to the server 10. When the user instructs the collective setting unit to omit the front region F and the rear region R, the processor 20a transmits, via the communication unit 20b, information indicating a print job for which omission is instructed. The processor 10a of the server 10 generates a print job for continuously performing printing based on the transmitted information.

### (1-2) Configuration of Server:

FIG. 4 is a block diagram showing a configuration of the server 10. The server 10 includes the processor 10a, a communication unit 10b, and a storage medium 10c. The processor 10a includes a CPU, a ROM, a RAM, or the like (not shown), and can execute various programs recorded in the storage medium 10c to control each unit of the server 10 and each device coupled to the network.

The communication unit 10b includes a communication interface via which the communication unit 10b communicates with an external device in accordance with various wired or wireless communication protocols. The server 10 can communicate with other devices via the communication unit 10b. The communication unit 10b may include an interface via which the communication unit 10b communicates with various removable memories attached to the server 10.

Various information is accumulated in the storage medium 10c of the server 10. For example, the print job data 10c1 generated based on the print file 20c1 and post-processing type information 10c2 indicating a post-processing type generated by the user are stored in the storage medium 10c.

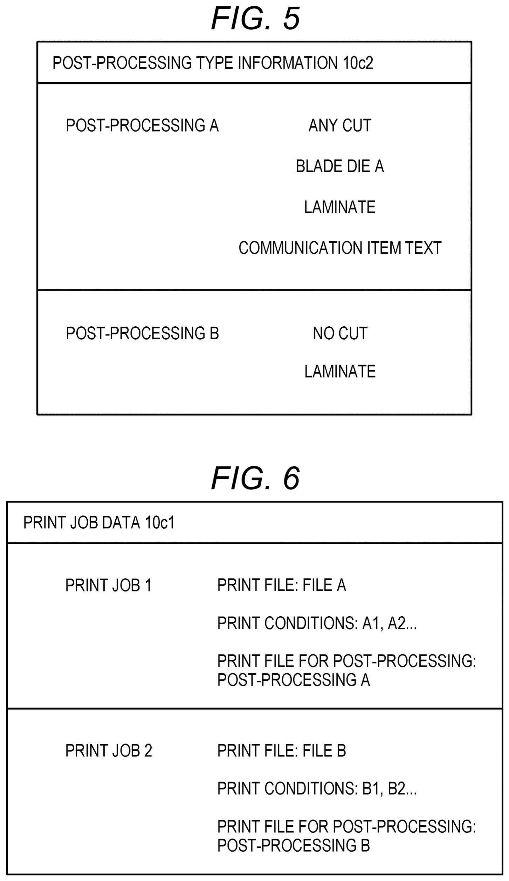

FIG. 5 is a diagram showing an example of the post-processing type information 10c2. The post-processing type information 10c2 is information indicating post-processing to be executed on the printed print medium PM after the printing of the print job is executed. Specifically, the post-processing type information 10c2 includes identification information indicating the post-processing type, information indicating the type of post-processing and parameters of post-processing, and text indicating communication items. The type of post-processing can be selected from the types of post-processing that can be executed by the post-processing device usable by the user. The parameters of post-processing are information for designating a variable element in the same post-processing type. The text indicating a communication item is an item to be communicated to the user who executes post-processing, and may include, for example, the procedure of the post-processing, identification information of the print jobs, the delivery destination, and the delivery deadline.

In FIG. 5, the identification information indicates post-processing types of post-processing A and post-processing B. Further, for the post-processing A, it is shown that the print medium after printing should be cut by a cutting device, which is a post-processing device, and that lamination processing should be performed by a laminating device. In the cutting device according to the present embodiment, since the blade die can be selected and set, an example is shown in which the blade die A, which is the type of the blade die, is selected as a parameter in the post-processing A with cutting. The type of the blade die is appropriately selected according to the type of the print medium and the shape to be cut.

The user can access the server 10 by operating the input unit 20e of the print setting device 20, associate information on post-processing to be executed after printing with identification information indicating the post-processing type, and register the post-processing type information 10c2. In the present embodiment, the information indicating the post-processing indicated by the post-processing type information 10c2 is printed in the front region F and the rear region R. For example, in the post-processing A shown in FIG. 5, information indicating post-processing to be executed by the cutting device is printed in the front region F, and information indicating post-processing to be executed by the laminating device is printed in the rear region R. The text indicating a communication item is printed in at least one of the front region F and the rear region R.

The user operates the input unit 20e of the print setting device 20 to access the server 10, uploads the print file 20c1, and registers the print condition to generate a print job. The post-processing to be executed after the printing of the print job can be selected and designated from the post-processing type information 10c2 registered in advance. The print job data 10c1 is data indicating a print job generated by the user. The print job data 10c1 may be defined in various forms. In the present embodiment, in the print job data 10c1, a print file indicating the content to be printed and a print condition are associated with the identification information of the print jobs. Further, a print file for processing, which is a print file indicating information indicating the post-processing type to be executed on the print medium PM after the print job is printed, is associated with the identification information of the print jobs.

FIG. 6 is a diagram showing an example of the print job data 10c1. Here, the identification information of the print jobs is indicated as a print job 1, a print job 2, and the like, the print files are indicated as print files A and B, and the print conditions are indicated as print conditions A1, A2, B1, and B2. The print file is the print file 20c1 uploaded by the user and indicates contents to be printed. The print file may be any form, and is implemented by, for example, a PDF file indicating a print image or the like. The print conditions are conditions under which the print file is printed, and may include any condition such as image quality in printing operation, a printing speed, colors used in printing, the number of copies to be printed, and the type of print medium.

The information indicating the post-processing type indicates the content of the post-processing type information 10c2, and the print file for post-processing is a print file for printing the content of the post-processing type information 10c2. That is, in the post-processing type information 10c2, the identification information of the post-processing type includes a type of post-processing to be executed in the post-processing of the identification information, a parameter, and a communication item text. The print job data 10c1 includes a print file for post-processing, which is a print file for printing these pieces of information on the print medium. In the present embodiment, the print content indicated by the print file is printed in the print region Z. The print content indicated by the print file for post-processing is printed in the front region F and the rear region R. FIG. 6 shows an example in which the print file for post-processing of the print job 1 is a file indicating the content of the post-processing A, and the print file for post-processing of the print job 2 is a file indicating the content of the post-processing B. The print conditions for the printing in the front region F and the rear region R may be the same as or different from the print conditions of the print region Z. Here, it is assumed that the print conditions for the printing in the front region F and the rear region R are the same.

In the server 10, as described above, the individual print job data 10c1 can be stored in the storage medium 10c. Therefore, when a print execution instruction is issued for each print job, printing based on each print job can be executed. On the other hand, the user can continuously print a plurality of print jobs. In this case, the user sets the print jobs of a print target and the print order, and sets whether to omit the front region F and the rear region R existing between the print regions Z of the continuous print jobs by the collective setting unit.

When the setting is performed, the identification information of the print jobs, the information indicating the print order, and the information indicating the print job for which omission is instructed are transmitted from the print setting device 20. The processor 10a of the server 10 receives the transmitted information via the communication unit 10b. The processor 10a arranges the print jobs in the designated print order based on the identification information of the print jobs, and generates print job data for performing printing in the print order. When there is a print job for which omission of the front region F and the rear region R is instructed, the processor 10a deletes a print file for post-processing for printing the front region F and the rear region R existing between the instructed print jobs.

For example, in the example shown in FIG. 2, when the omission of the front region F and the rear region R in the print jobs 1, 2 is instructed, the processor 10a deletes the print file for post-processing for printing the front region F2 and the rear region R1 existing between the print jobs 1, 2. Regions other than these regions, for example, the front region F1 and the rear region R2 are not deleted.

### (1-3) Configuration of Control Terminal:

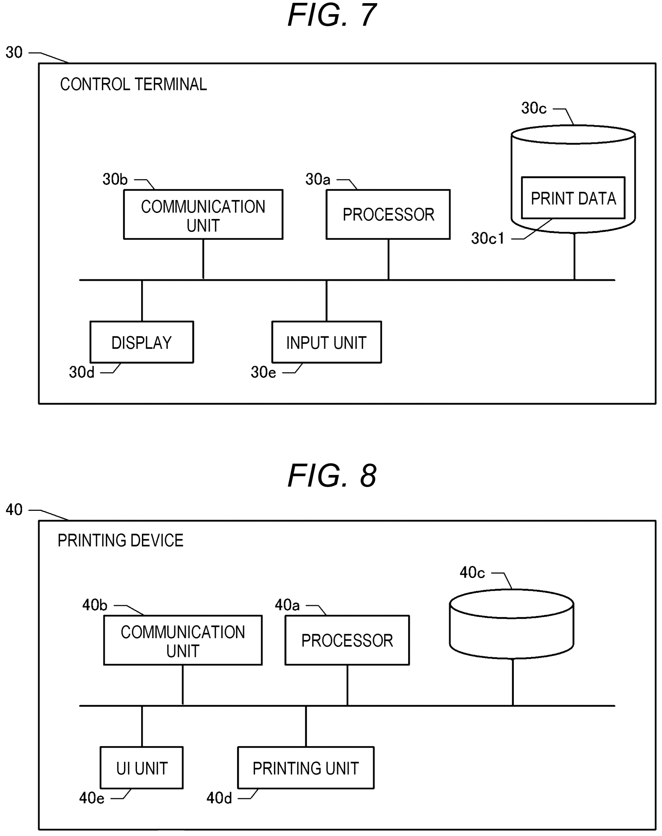

FIG. 7 is a block diagram showing a configuration of the control terminal 30. The control terminal 30 is a device that generates print data for performing printing in accordance with a print job in the printing device 40 and controls printing. The control terminal 30 includes a processor 30a, a communication unit 30b, a storage medium 30c, a display 30d, and an input unit 30e. The processor 30a includes a CPU, a ROM, a RAM, and the like (not shown), and can execute various programs recorded in the storage medium 30c to control each unit of the control terminal 30.

The communication unit 30b includes a communication interface via which the communication unit 30b communicates with an external device in accordance with various wired or wireless communication protocols. The control terminal 30 can communicate with another device via the communication unit 30b. The communication unit 30b includes an interface via which the communication unit 30b communicates with various removable memories attached to the control terminal 30.

In the storage medium 30c of the control terminal 30, print data 30c1 for printing a print target related to a print job is recorded. The print data 30c1 is data generated by the processor 30a executing an image process or the like according to the print condition based on the print job data 10c1. That is, the processor 30a executes the image process or the like based on the print file 20c1 indicating the content to be printed in the print region Z, and generates print data for performing printing in the print region Z. The processor 30a executes the image process or the like based on the print file for post-processing and generates print data for performing printing in the front region F and the rear region R.

The print data 30c1 is generated by arranging the print data according to the print order. That is, the print data is arranged in the order of the front region F, the print region Z, and the rear region R. The processor 30a transmits the arranged print data to the printing device 40 via the communication unit 30b. As a result, the printing device 40 prints a print target in each region in the order of the front region F, the print region Z, and the rear region R. That is, information indicating a post-process to be printed in the front region F is printed in the front region F, content designated as a print target by the user is printed in the print region Z, and information indicating a post-process to be printed in the rear region R is printed in the rear region R.

On the other hand, when the print job instructed to be printed from the server 10 is not a single print job but a print job for continuously executing a plurality of print jobs, the processor 30a refers to a print file and a print file for post-processing included in each print job and executes the image process or the like to generate print data for performing printing in the print region Z, the front region F, and the rear region R. However, since the print file for post-processing for the omitted front region F and rear region R is omitted and is not transmitted from the server 10, print data for the omitted front region F and rear region R is not generated.

The processor 30a arranges the generated print data according to the print order and transmits the print data to the printing device 40 via the communication unit 30b. As a result, the printing device 40 repeats a process of printing a print target in each region in the order of the front region F, the print region Z, and the rear region R. However, the omitted front region F and rear region R are not printed.

The display 30d is a display device that displays any image. The input unit 30e is a device through which the user performs an input operation, and includes, for example, a keyboard, a mouse, and a touch panel. Various information may be displayed on the display 30d, and the user can execute various inputs by operating the input unit 30e. The display 30d and the input unit 30e may be used as user interfaces for various functions. For example, the display 30d and the input unit 30e may be used as a user interface that confirms the progress of the print job, confirms the omitted front region F and rear region R, and the like.

### (1-4) Configuration of Printing Device:

FIG. 8 is a block diagram showing a configuration of the printing device 40. The printing device 40 includes a processor 40a, a communication unit 40b, a storage medium 40c, a printing unit 40d, and a UI unit 40e. The processor 40a includes a CPU, a ROM, a RAM, and the like (not shown), and can execute various programs recorded in the storage medium 40c and control each unit of the printing device 40.

The communication unit 40b includes a communication interface via which the communication unit 40b communicates with an external device in accordance with various wired or wireless communication protocols. The printing device 40 can communicate with the other devices via the communication unit 40b. The communication unit 40b may include an interface for communicating with various removable memories attached to the printing device 40.

The printing unit 40d is a part that executes printing, and may adopt various printing methods such as an inkjet method and an electrophotographic method. The printing unit 40d includes an actuator, various devices, sensors, drive circuits, mechanical components, and the like for performing printing on various print media. The sensor includes a sensor that detects various detection targets that can change in the printing device 40. The detection targets are not limited to specific ones, and examples of the sensors may include a sensor that detects a remaining amount of the print medium, and a sensor that detects a remaining amount of each color ink used to perform printing.

The UI unit 40e includes a touch panel display, various keys, switches, and the like. The touch panel display includes a display panel that displays various information, such as a status of the printing device 40 and a remaining amount of ink, and a touch detection panel overlaid at the display panel, and detects a touch operation by a human finger or the like. The processor 40a can acquire operation contents of the user via the UI unit 40e. The processor 40a can display various information on a display of the UI unit 40e to notify the user of the information. The user may be able to instruct the start of print medium replacement, interruption of the print job, or the like via the UI unit 40e.

The processor 40a executes printing in response to an instruction from the control terminal 30. That is, when the printing related to the print job is executed, the print data 30c1 is transferred from the control terminal 30 to the printing device 40. The processor 40a receives the print data 30c1 via the communication unit 40b, and controls the printing unit 40d to print the print content indicated by the print data 30c1.

### (2) Printing Process:

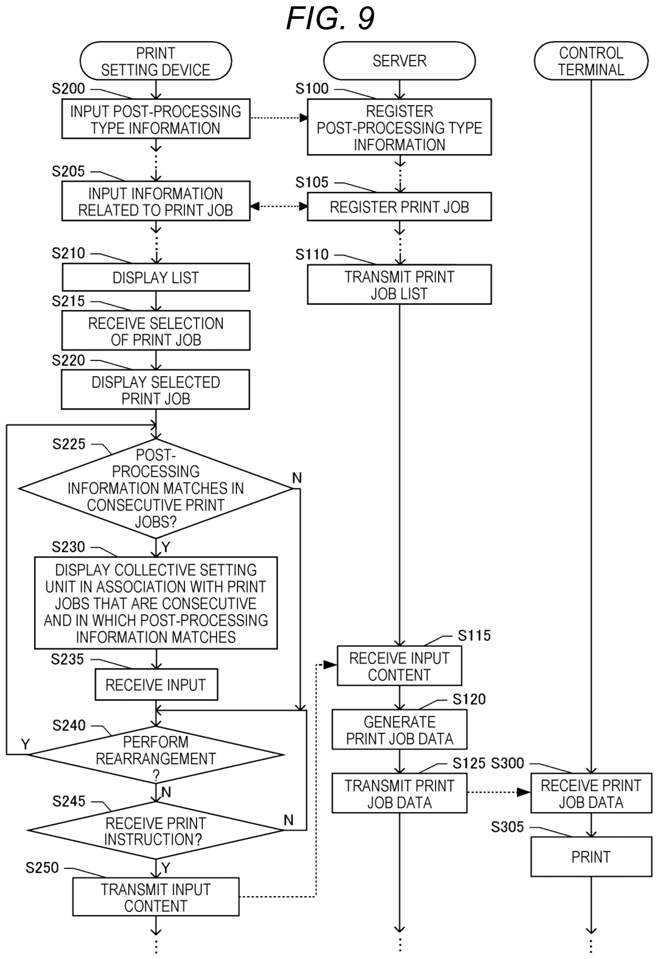

In the above-described system, the server 10, the print setting device 20, the control terminal 30, and the printing device 40 cooperate to generate a print job and perform printing based on the generated print job. The printing process will be described below. FIG. 9 is a flowchart of the printing process.

In the present embodiment, the user inputs post-processing type information by the functions of the reception unit 20a1 and the display unit 20a2 before executing a printing process (step S200). That is, the processor 20a displays a user interface for inputting the post-processing type information on the display 20d by the function of the display unit 20a2. The user operates the input unit 20e to input the identification information of the post-processing type, and inputs the type of post-processing and the parameter of post-processing to be executed in the post-processing type of the identification information, and the text indicating the communication item.

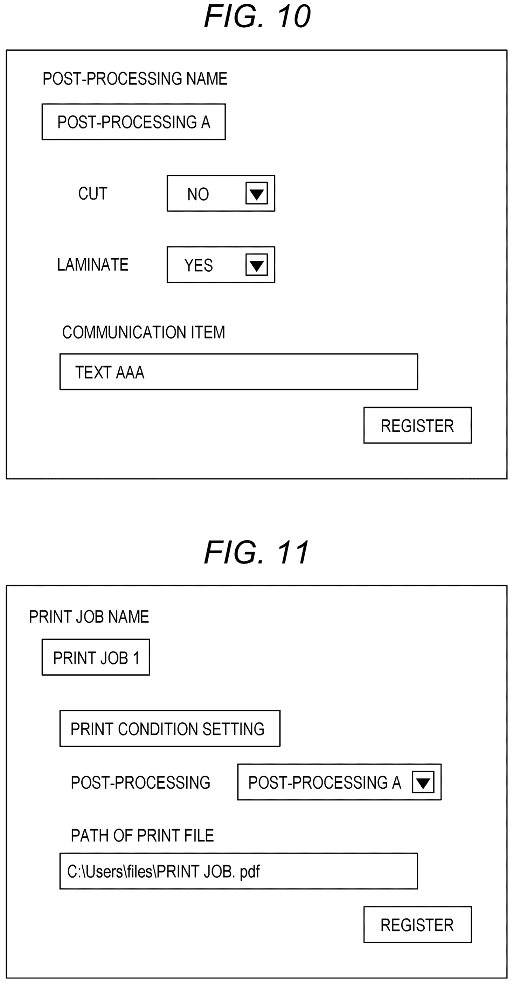

FIG. 10 shows an example of a screen for inputting a post-processing type. A post-processing name as identification information of the post-processing type can be input to the screen. It is possible to input whether to execute post-processing by the cutting device and post-processing by the laminating device. Furthermore, the text can be input as a communication item. The user operates the input unit 20e to input desired information on the screen. The parameter of the post-processing can be input when the execution of the post-processing is designated. For example, when "Yes" is designated for the cut, the type of the blade die or the like can be further selected as a parameter.

When the user performs input and operates a registration button, the processor 20a receives the input information and transmits the information to the server 10 via the communication unit 20b. The processor 10a of the server 10 receives the input information via the communication unit 10b and registers the post-processing type information (step S100). That is, the processor 10a generates the post-processing type information 10c2 based on the input information and stores the post-processing type information 10c2 in the storage medium 10c.

The user can register a print job at any timing. Therefore, the user inputs information on the print job by the functions of the reception unit 20a1 and the display unit 20a2 (step S205). That is, the processor 20a displays a user interface for registering a print job on the display 20d by the function of the display unit 20a2. The user operates the input unit 20e to input the identification information of the print jobs, designates a print condition, designates a print file indicating a print target of a print job, and designates a post-processing type indicating the post-processing to be executed in the print job.

FIG. 11 shows a screen for registering a print job. A print job name can be input to the screen. In addition, by operating the button for setting the print condition, the user can set the print condition when performing printing using another screen. Further, the user can select identification information of any post-processing type from the post-processing types registered in advance in the post-processing type information 10c2 and designate the post-processing type. Further, the user can designate the print file 20c1 indicating the print content to be printed in the print region Z of the print job. FIG. 11 shows an example in which the print file 20c1 is designated by a path of the print file 20c1.

When the user performs input and operates a registration button, the processor 20a receives information input by the user using a screen. Further, the processor 20a acquires, from the server 10, the post-processing type information 10c2 corresponding to the identification information of the post-processing type designated by the user, and generates a print file for post-processing for printing the post-processing type information 10c2. The processor 20a transmits the information input by the user, the print file, and the print file for post-processing to the server 10 via the communication unit 20b. The processor 10a of the server 10 receives the input information via the communication unit 10b and registers a print job (step S105). That is, the print file, the print condition, and the print file for post-processing are associated with the identification information of the print jobs, and are stored in the storage medium 10c as the print job data 10c1.

In a state where the post-processing type information 10c2 and the print job data 10c1 are registered, the user can instruct execution of a desired print job at any timing. In the present embodiment, the user can instruct execution of a print job by selecting a print job registered in the server 10 as the print job data 10c1.

In order to instruct the execution of the print job, the user displays a list of print jobs by the function of the display unit 20a2 (step S210). Therefore, the processor 20a transmits a transmission request for a list of print jobs to the server 10 via the communication unit 20b. The processor 10a refers to the print job data 10c1 according to the transmission request, acquires the identification information of the print jobs and identification information of the post-processing type corresponding to each print job, and transmits the identification information to the print setting device 20 (step S110). Here, a user who registers a print job and a user who gives an execution instruction of the registered print job may be different users.

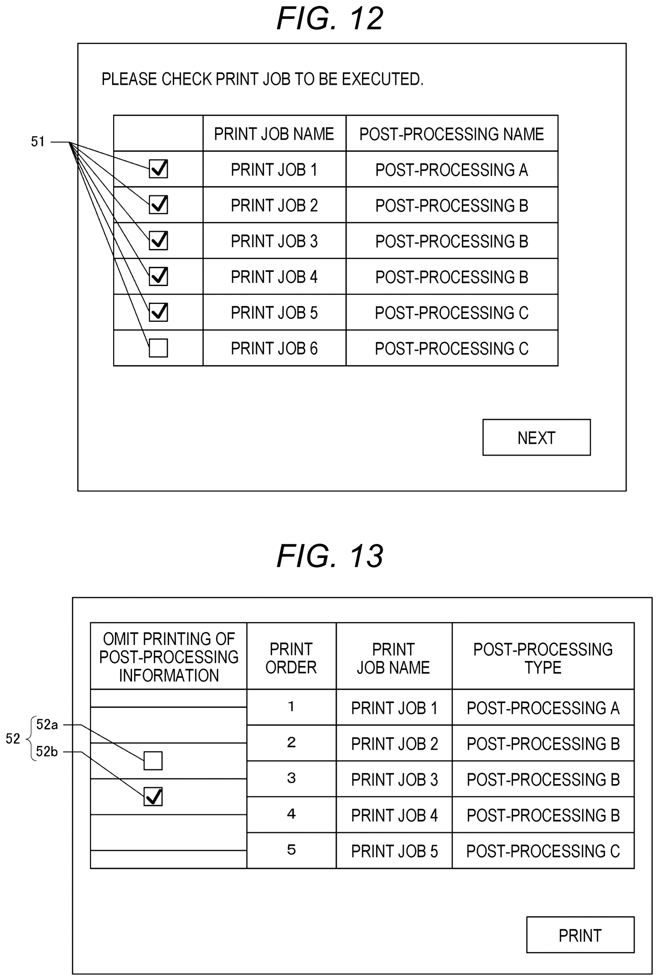

The processor 20a acquires the identification information via the communication unit 20b, and controls the display 20d to display a list of the identification information by the function of the display unit 20a2. FIG. 12 is a diagram showing an example of a list display. In the example shown in FIG. 12, print job names that are the identification information of the print jobs and post-processing names that are the identification information of the post-processing type are arranged in a vertical direction and displayed as a list. In the present example, each print job is associated with a check box 51 for designating whether to instruct the execution of printing.

Next, the processor 20a receives the selection of the print job by the function of the reception unit 20a1 (step S215). Specifically, the user operates the input unit 20e, selects a print job to be printed using a screen shown in FIG. 12, and checks the check box 51 displayed on the screen. At this time, the user can operate the input unit 20e to rearrange the print jobs. When the rearrangement is performed, the processor 20a controls the display 20d to change the arrangement order of the print jobs, and regards the rearranged order as the print order of the print jobs. The arrangement order of the print jobs is the execution order of printing, and printing is executed from top to bottom. After selecting the print job and designating the execution order, the user instructs the completion of the selection. In the case of the screen shown in FIG. 12, the user instructs the completion of the selection using a "next" button.

When the selection completion is instructed, the processor 20a displays the selected print job on the display 20d by the function of the display unit 20a2 (step S220). Specifically, the processor 20a displays the print jobs selected in step S215 in the designated print order. FIG. 13 is a diagram showing an example of a screen on which designated print jobs are displayed. In FIG. 13, print job names, which are the identification information of the print jobs selected by the user, are associated with the print order. Print jobs are associated with the post-processing names that are identification information of the post-processing type.

Next, the processor 20a determines whether the identification information of the post-processing type matches in the continuous print jobs by the function of the display unit 20a2 (step S225). Specifically, the processor 20a specifies the print order of the print jobs currently displayed on the display 20d, and compares the identification information of the post-processing types of the continuous print jobs. When there is one or more sets of print jobs in which the identification information of the post-processing type matches, the processor 20a determines that the identification information of the post-processing type matches in continuous print jobs.

In step S225, when it is not determined that the identification information of the post-processing type matches in the continuous print jobs, the processor 20a skips steps S230 and S235. In step S225, when it is determined that the identification information of the post-processing type matches in the continuous print jobs, the processor 20a displays, by the function of the display unit 20a2, a collective setting unit in association with print jobs that are continuous and in which identification information of the post-processing type matches (step S230). In the present embodiment, the collective setting unit is displayed when the identification information of the post-processing types of the continuous print jobs matches, that is, when the post-processing types are the same. In the example shown in FIG. 13, the post-processing types of the print jobs 2, 3 match, and the post-processing types of the print jobs 3, 4 match. Therefore, the processor 20a displays, on the display 20d, a collective setting unit corresponding to the print jobs 2, 3 and a collective setting unit corresponding to the print jobs 3, 4. That is, the collective setting unit is enabled.

In the present embodiment, the identification information of the print jobs is displayed in a rectangular frame and arranged in the vertical direction, and a check box 52 is displayed in a rectangular frame extending from a center of one frame in the vertical direction to a center of the other frame in the vertical direction, thereby configuring a collective setting unit. When the post-processing information of the continuous print jobs does not match, the collective setting unit is not displayed. That is, the collective setting unit is disabled. In the example shown in FIG. 13, the post-processing types of print jobs 1, 2 and 4, 5 do not match. Therefore, the processor 20a does not display the check box 52 corresponding to the print jobs 1, 2 and the check box 52 corresponding to the print jobs 4,5 on the display 20d.

In the present embodiment, the collective setting unit is a part that sets whether to collectively omit the front region F and the rear region R of the continuous print jobs (the length is set to 0). That is, when the check box 52 is checked, the printing of the front region F and the rear region R sandwiched between the corresponding print jobs is omitted. When the check box 52 is not checked, the printing of the front region F and the rear region R sandwiched between the corresponding print jobs is not omitted.

The user operates the input unit 20e to perform an input to the check box 52 displayed in step S230, and designates whether to omit printing of the front region F and the rear region R. The processor 20a receives an input by the user (step S235). Here, the user can operate the input unit 20e to rearrange the print jobs, and the processor 20a regards the arrangement order of the rearranged print jobs as the print order.

Next, the processor 20a determines whether the rearrangement is performed by the function of the display unit 20a2 (step S240). When the rearrangement is performed, the processor 20a repeats processes from step S225. That is, the processor 20a displays the collective setting unit based on post-processing information of the rearranged print jobs.

When it is not determined in step S240 that the rearrangement is performed, the processor 20a determines whether a print instruction is received (step S245). That is, in the screen shown in FIG. 13, a button for issuing a print instruction is displayed, and when the user operates the input unit 20e to operate a print button, the processor 20a determines that a print instruction has been issued.

When it is not determined in step S245 that the print instruction is received, the processor 20a repeats the processes in step S240 and subsequent steps. When it is determined in step S245 that the print instruction is received, the processor 20a transmits the input content to the server 10 (step S250). That is, the processor 20a transmits, to the control terminal 30 via the communication unit 20b, the identification information of the print jobs to be continuously printed, the information indicating the print order, and the information indicating the print job instructed to be omitted.

The processor 10a of the server 10 receives the transmitted input content via the communication unit 10b (step S115). The processor 10a arranges the print jobs in the designated print order based on the identification information of the print jobs, and generates print job data for performing printing in the print order (step S120). When there is a print job for which omission of the front region F and the rear region R is instructed, the processor 10a deletes a print file for post-processing for printing the front region F and the rear region R existing between the instructed print jobs.

Next, the processor 10a transmits the print job data to the control terminal 30 via the communication unit 10b (step S125). The processor 30a of the control terminal 30 receives the print job data via the communication unit 30b (step S300), and executes printing (step S305). That is, the processor 30a performs the image process or the like on the print file included in the received print job data in the print order to generate print data. The processor 30a causes the printing device 40 to perform printing by outputting the print data to the printing device 40 in the print order.

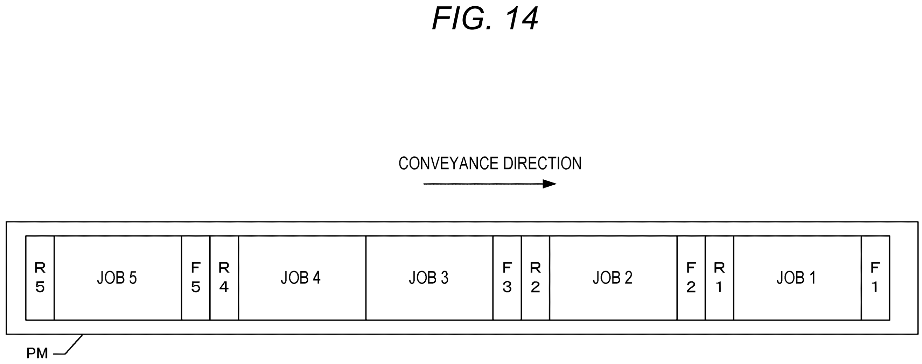

Here, as shown in FIG. 13, it is assumed that the print jobs 1 to 5 are instructed to be printed in order, a check box 52a corresponding to the print jobs 2, 3 is not checked, and a check box 52b corresponding to the print jobs 3,4 is checked. That is, it is assumed that omission of the front region F and the rear region R between the print jobs 2, 3 is not instructed, and omission of the front region F and the rear region R between the print jobs 3, 4 is instructed. In this case, as shown in FIG. 14, the print content of the print jobs 1 to 5 is printed on the print medium PM in the print regions Z1 to Z5, respectively. Since the omission of the front region F and the rear region R between the print jobs 3, 4 is instructed, the rear region R3 of the print job 3 and the front region F4 of the print job 4 are not printed. Further, although the post-processing types of the print job 2, 3 match, since the omission of the front region F and the rear region R between the print jobs 2, 3 is not instructed, the rear region R2 of the print job 2 and the front region F3 of the print job 3 are printed.

In the above configuration, when the post-processing information of the continuous print jobs matches, it is possible to set whether the front region F and the rear region R interposed between the continuous print jobs are collectively omitted. That is, in the present embodiment, when one of the continuous print jobs is regarded as a first print job and the other is regarded as a second print job, an operation to the collective setting unit is enabled or disabled based on first post-processing information indicating post-processing of the first print job and second post-processing information indicating post-processing of the second print job.

For example, in the example shown in FIG. 13, when the print job 1 is regarded as a first print job and the print job 2 is regarded as a second print job, the post-processing information of the first print job is post-processing A, the post-processing information of the second print job is post-processing B, and the first post-processing information and the second post-processing information are not common. Therefore, it can be said that the check box 52 is not displayed between the print job 1 and the print job 2, and an operation on the collective setting unit related to these print jobs is disabled. According to this configuration, it is possible to prevent the front region F and the rear region R that should not be omitted from being erroneously instructed to be omitted.

In the example shown in FIG. 13, when the print job 2 is regarded as a first print job and the print job 3 is regarded as a second print job, the post-processing information of the first print job is post-processing B, the post-processing information of the second print job is post-processing B, and the first post-processing information and the second post-processing information are common. Therefore, it can be said that the check box 52 is displayed between the print job 2 and the print job 3, and an operation on the collective setting unit related to these print jobs is enabled. According to this configuration, it is possible to collectively set whether to omit the front region F and the rear region R that can be omitted. According to this configuration, the collective setting is possible, but the individual setting is not possible. That is, it is not possible to individually set whether to omit each of the front region F and the rear region R. Therefore, meaningless omission such as omission of only one of the front region F and the rear region R is prevented.

In the above configuration, the collective setting unit is a setting unit that sets the front region F and the rear region R between continuous print jobs. Then, it is not possible to collectively set a region that is not a target of collective setting by the collective setting unit. Specifically, when the post-processing information of the continuous print jobs matches, the processor 20a displays a collective setting unit for selecting omission of the front region F and the rear region R existing between the continuous print jobs. However, the processor 20a does not display a collective setting unit that selects omission of the front region F and the rear region R for a discontinuous print job, or a job in which print jobs continue but the post-processing information does not match.

For example, it is assumed that the print jobs 1, 2 are continuous and there is no other print job. In this case, the print job 1 is regarded as a first print job, the print job 2 is regarded as a second print job, the front region F1 of the print job 1, which is the first print job, is regarded as a first front region, and the rear region R1 is regarded as a first rear region. Further, the front region F2 of the print job 2, which is the second print job, is regarded as the second front region, and the rear region R2 is regarded as the second rear region.

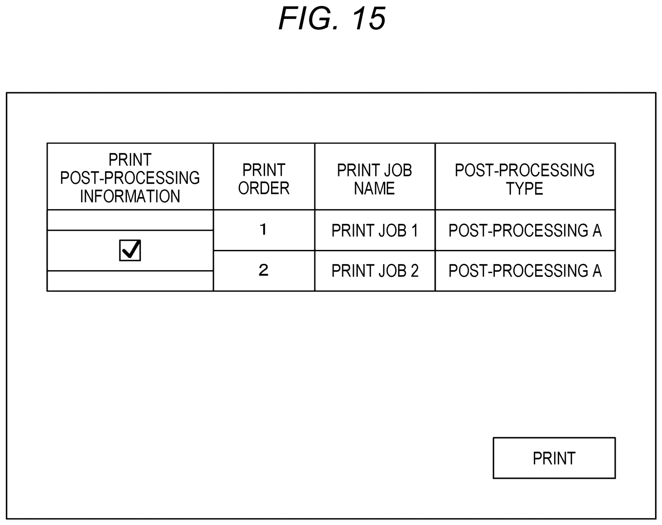

In this case, the screen displayed in step S225 is the screen as shown in FIG. 15. That is, the collective setting unit is displayed that enables collective selection of settings related to both the process of changing the length of the first rear region and the process of changing the length of the second front region. On the other hand, a setting unit that can perform settings related to the process of changing the length of the first front region and the process of changing the length of the second rear region is not displayed. Therefore, it is impossible to set the process of changing the length of the first front region and the process of changing the length of the second rear region which is the rear region of the second print job. According to this configuration, the user does not erroneously omit the front region F and the rear region R that cannot be omitted.

### (3) Other Embodiments:

The above-described embodiment is an example for carrying out the present disclosure, and various other embodiments can be adopted. For example, in the above-described embodiment, the server 10 and the print setting device 20 are implemented by different devices, or both may be the same device or may be distributed to three or more devices. The control terminal 30 and the printing device 40 may be integrated. Further, the execution order of the processes in FIG. 9 is not limited to the orders shown in these drawings. For example, in FIG. 9, steps S100 and S105 and steps S200 and S205 are represented by continuous blocks. The order may be different, the timing at which a process is executed may be any timing, and the process may not be executed continuously.

Further, a certain terminal may be used by a plurality of persons. For example, in the print setting device 20, a print job may be generated by a certain user, and a print instruction may be performed by another user. Further, the modes of data shown in FIGS. 5 and 6 are not limited to these modes. For example, the post-processing information may not be selected from the predetermined post-processing type information 10c2, and the post-processing information may be generated and associated with each print job. In this case, whether the post-processing information matches is determined by comparing the post-processing information of the continuous print jobs. Furthermore, the print file for processing may be generated by the server 10 or the control terminal 30.

A reception unit may receive a print job for printing each of a print region and a front region and a rear region adjacent to the print region on a front side and back side in a conveyance direction of a print medium. That is, in the print job, information such as an image and characters is printed in each of the print region, the front region, and the rear region. The print job only needs to be able to print a print target in each region. Therefore, the print job includes at least an image or the like to be printed in each region and a print condition for printing the image or the like.

The print region may be a region set for printing an image or the like on a print medium, and an image or the like printed in the print region is finally used as a printed matter. On the other hand, the front region and the rear region are regions on the print medium where information other than the image or the like to be included in the printed matter to be finally used is printed. Therefore, various types of information other than the post-processing information may be printed in the front region and the rear region. For example, various information may be printed, such as identification information (file name or the like) of an image to be printed in a print region, information on a delivery date, a delivery destination, and processing necessary for a printed matter (work procedure for transportation destination or delivery, or the like), and a frame for position adjustment during cutting.

The front region and the rear region are regions adjacent to the print region on the front side and the rear side in the conveyance direction of the print medium. That is, when the print medium after printing is conveyed along the conveyance direction, information on the front region or the rear region may be referred to before the print region. The sizes, shapes, and the like of the print region, the front region, and the rear region are not limited.

The display unit may display, on the display unit, a collective setting unit for collectively performing settings related to both a process of changing a length of a first rear region, which is a rear region of a first print job, and a process of changing a length of a second front region, which is a front region of a second print job, with respect to the first print job and the second print job which are the print jobs continuously printed on the print medium. That is, the display unit may display a user interface in which the length of the first rear region and the length of the second front region are set not individually but collectively by the collective setting unit.

The first print job and the second print job are jobs that are continuously printed on a print medium. That is, focusing on the print region, an image indicated by the second print job is printed next to an image indicated by the first print job. As a matter of course, there are a front region and a rear region before and after the print region, and if there is a print target to be printed in each region, any information is printed on each region. The process of changing the length of the first rear region and the process of changing the length of the second front region may be a process of changing a length of a region, and the length may be shortened or lengthened. A process of setting the length to 0 is also included.

As a mode for shortening the lengths of the front region F and the rear region R, various modes may be adopted, and for example, it is possible to adopt a configuration in which, in the post-processing information, common information is omitted between continuous print jobs, and the length is adjusted such that information that is not common is printed. Although it is possible to perform continuous post-processing even when common information is omitted, it is also possible to shorten the lengths of the front region F and the rear region R by leaving information convenient to be printed without omission. For example, in order to distinguish the printed matter after the post-processing, the identification information of the print jobs or the like may be printed without being omitted.

The collective setting unit may be capable of collectively performing settings related to both the process of changing the length of the first rear region and the process of changing the length of the second front region. That is, the process of changing the length of the first rear region and the process of changing the length of the second front region may not be individually performed, and may be performed collectively. The setting content by the collective setting unit may be a setting involving a change in the length of the region, and is not limited to a setting involving omission of printing in the first rear region and the second front region. For example, the length of the region may be changed by omitting a part of the information printed in the region. A length of a setting region may be a length in any direction, and is not limited to a length along the conveyance direction.

In the above-described embodiment, it is determined whether the post-processing information of the continuous print jobs is common based on whether the post-processing types are the same. Whether the post-processing information is common is not limited to a case where all pieces of post-processing information completely match, and may be partially match the same. That is, whether the post-processing information is common may be determined based on whether the post-processing of the print job is performed as scheduled even when the printing of the post-processing information on the front region F and the rear region R is omitted.

For example, even when the post-processing information is partially different, if printing is omitted for a part of the post-processing information to the front region F and the rear region R between continuous print jobs, the printed matters of the continuous print jobs may be subjected to post-processing, completed as planned, and may be considered to be common to the post-processing information. Such a configuration includes that, for example, if a code readable by the post-processing device and a character readable by the user are displayed in the post-processing information, any one of them is omitted.

The present disclosure is also applicable to a program executed by a computer and a method. The system, the program, and the method as described above may be implemented as a single device or may be implemented by using components provided in a plurality of devices, and may include various forms. Also, the present disclosure may be changed as appropriate, such as a part being software and a part being hardware. Moreover, the present disclosure can be applied as a recording medium of a program that controls the system. Of course, the recording medium of the program may be a magnetic recording medium or may be a semiconductor memory, and any recording medium to be developed in the future can be similarly employed.

## Claims

1. A print setting device comprising:
a reception unit configured to receive print jobs for performing printing in a print region, and a front region and a rear region adjacent to the print region on a front side and a rear side in a conveyance direction of a print medium; and
a display unit configured to display a collective setting unit for collectively performing settings related to both a process of changing a length of a first rear region, which is a rear region of a first print job, and a process of changing a length of a second front region, which is a front region of a second print job, with respect to the first print job and the second print job which are the print jobs continuously printed on the print medium.

2. The print setting device according to claim 1, wherein
the display unit allows the collective setting unit to collectively perform the settings related to both the process of changing the length of the first rear region and the process of changing the length of the second front region, and
does not allow the collective setting unit to perform settings related to a process of changing a length of a first front region, which is the front region of the first print job, and a process of changing a length of a second rear region, which is the rear region of the second print job.

3. The print setting device according to claim 1, wherein
an operation to the collective setting unit is enabled or disabled based on first post-processing information indicating post-processing of the first print job and second post-processing information indicating post-processing of the second print job.

4. The print setting device according to claim 3, wherein
when the first post-processing information and the second post-processing information are common, the operation on the collective setting unit is enabled.

5. The print setting device according to claim 3, wherein
when the first post-processing information and the second post-processing information are not common, the operation on the collective setting unit is disabled.

6. The print setting device according to claim 1, wherein
the collective setting unit is an instruction unit for giving an instruction to shorten the lengths of the first rear region and the second front region.

7. The print setting device according to claim 1, wherein
information on post-processing performed by conveying the print medium in the conveyance direction is printed in the front region, and
information on post-processing performed by conveying the print medium in a direction opposite to the conveyance direction is printed in the rear region.

8. A non-transitory computer-readable storage medium storing a print setting program causing a computer to function as:
a reception unit configured to receive print jobs for performing printing in a print region, and a front region and a rear region adjacent to the print region on a front side and a rear side in a conveyance direction of a print medium; and
a display unit configured to display a collective setting unit for collectively performing settings related to both a process of changing a length of a first rear region, which is a rear region of a first print job, and a process of changing a length of a second front region, which is a front region of a second print job, with respect to the first print job and the second print job which are the print jobs continuously printed on the print medium.
